# EUROPEAN PATENT SPECIFICATION

(11) **EP 1 130 417 B1**
(45) Date of publication and mention of the grant of the patent: **03.10.2007**
(21) Application number: 00200732.6
(22) Date of filing: 29.02.2000
(51) Int. Cl.: G01T 1/29

(54) **Photostimulable phosphor read-out apparatus**
Vorrichtung zum Auslesen von Speicherleuchtstoff
Dispositif de lecture pour substance luminescente photostimulable

(43) Date of publication of application: 05.09.2001
(73) Proprietor: Agfa HealthCare NV, 2640 Mortsel (BE)
(72) Inventor: Van Uffel, Bruno, Agfa-Gevaert N.V.,Corp.IPDep3800, 2640 Mortsel (BE)
(74) Representative: Theunis, Patrick

(56) References cited:
- EP-A- 0 175 285
- EP-A- 0 639 819
- US-A- 4 845 540
- US-A- 4 922 103

## Description

### FIELD OF THE INVENTION

The present invention relates to a system for reading a radiation image having optimal sensitivity within a wide signal range.

### BACKGROUND OF THE INVENTION

In computed radiography it is nowadays common practice to record a radiation image on a photostimulable phosphor screen by exposing the screen to an image-wise pattern of penetrating radiation such as X-rays.
The latent image is read out by stimulating the phosphor with light having (a) wavelength(s) within the stimulation wavelength range of the phosphor.
The light emitted upon stimulation is then detected and converted into an electronic signal representation of the image.

Commonly the emitted light is captured by a photomultiplier tube (PMT). In such a PMT, the signal is amplified to a level which is large enough to permit further analogue and digital processing without significant noise increase due to the electronic circuitry used for this processing.

The degree of amplification is controlled via the high tension applied to the dynodes of the photomultiplier tube. The amplification factor is set to be inversely proportional to the expected amount of photons of light emitted upon stimulation.
When an image is to be read out where a large amount of photons is expected, the amplification is set to a lower level, the amount of output electrons generated per captured photon will consequentially be less than in the case amplification is set to a higher level and the signal value will remain within the signal range of the electronic circuitry used for processing the output signal of the PMT.

As an alternative to the photomultiplier tube a solid state detector such as a charge coupled device or an amorphous silicon detector can be used, see for example US-A-4 922 103. Such detectors can be arranged in an array so that a line or an area of pixels in an image can be detected simultaneously. This eliminates the use of flying spot scanner systems that need to be used together with the PMT to scan each pixel sequentially. It also allows fast scanning since many laser sources can be used easily.

Also in the case where such a solid state detector or an array of such detectors is used instead of a PMT, the above-described problem regarding the level of the detected signal exists.

For some images a very low amount of photons are available to generate the image. In this case the sensitivity of the detector ensures that the electronic noise of the electronic circuitry part of the read out detector and the electronic noise of the electronic circuitry used for electronic signal processing remains small compared to the image noise.

However, images are also stored for which a much higher irradiation dose was used in order to reduce the Poisson noise in the image. In that case a much higher amount of signal photons is available when the image stored in the phosphor screen is read out.

In general the sensitivity of the detector is not optimal for all the above kinds of images.

Attempts towards a solution for this problem have been made.

One solution consists of inserting an amplifier with controllable gain between the sensor and the subsequent signal processing electronics.
High gain of the amplifier can be set for low dose images and low gain can be set for high dose images. A drawback of this solution is that the sensor read out noise is also amplified. This mostly affects the reading of low dose images.

Another possible solution consists in controlling the integration time of the pixels in the sensor either globally or individually. This technique is well-known in CCD sensors to control the sensitivity in different exposure situations.

The method is generally based on the following procedure. A capacitor is coupled to the solid state sensor so that light captured by the sensor is converted into photoelectrons which are stored in a capacitor.

The path between the sensor and the capacitor can be interrupted for example by means of a switch. The time period during which the switch is closed is controlled so that photoelectrons are integrated by the capacitor during a period of time which is set to be inversely proportional to the expected amount of photoelectrons.

When the capacitor is selected so as to obtain maximum sensitivity and when for low dose images this switch is set so that the capacitor is integrating during the entire stimulation period, the problem is solved for low dose images.
However, for high dose images the additional photons which are generated do not contribute to the electronic image representation and consequentially the relative contribution of the Poisson noise does not decrease with increasing dose. High dose images will therefore not have the improved image content which was envisaged when increasing the dose.

### OBJECT OF THE INVENTION

It is an object of the present invention to provide a system for reading a radiation image which has an optimal sensitivity within a wide signal range and which overcomes the above inconveniences of the prior art systems.

### SUMMARY OF THE INVENTION

The above-mentioned object is realised by a system for reading a radiation image having the specific features defined in claim 1.

The system comprises
- an array of imaging elements arranged to detect the radiation image and to convert it into a charge representation of the image, and
- charge integrating means coupled to said array of imaging elements for integrating an amount of charge detected by an element of said array of solid state imaging elements.

The system further has
- means for determining or setting an amount of charge which is expected to be detected, and
- means for adjusting the charge storage capacity of said charge integrating means in accordance with the expected charge amount.

In one embodiment the imaging elements are solid state imaging elements. Examples of such imaging elements are a charge coupled device array, a CMOS solid state image detector, a thin film on ASIC sensor array (consisting of an amorphous silicon layer on top of a Cmos structure), polymers or the like.
An array of sensor elements can be one-dimensional or multidimensional.

In a specific embodiment the radiation image is temporarily stored in a photostimulable phosphor screen. Means are then provided for stimulating the screen so as to cause it to emit image-wise modulated light. The imaging elements are then arranged to detect this image-wise modulated light.

The amount of charge which is expected to be detected can be determined or set in several ways.

The expected amount can for example be defined on the basis of the operators experience and can be entered manually into the read out apparatus, e.g. via keyboard input.

In a specific embodiment an expected amount of charge is associated with each individual exposure class which can be set when exposing the object to radiation. In the above described specific example the exposure class is set at the time of recording a radiation image onto the photostimulable phosphor screen.

This correlation can be stored in advance in a memory device part of the read out system. The expected amount of charge can then be retrieved upon identification of the exposure class which has been set.

The exposure class which has been set can be entered manually into the read out apparatus.

In the above described specific embodiment wherein the radiation image is temporarily stored in a photostimulable phosphor screen, the exposure class can be stored in an electronic memory device which is provided on a cassette conveying a stimulable phosphor screen. The read out system needs then to be provided with read out means for reading the data which have been stored in this electronic memory device prior to the read out of the photostimulable phosphor screen.

The amount of charge which is output by the array of imaging elements is fed into charge integrating means coupled to this array. In one embodiment the charge integrating means are a set of switchable capacitors.

The number of capacitors or the total capacitance that is switched into the circuit is controlled in accordance with the expected amount of charge.

Preferably the total capacitance of the capacitor or of the array of capacitors that is switched into the circuit is inversely proportional to the expected charge amount.

In a preferred embodiment the total charge capacity is set to be minimal when a low dose image is read out. In this way each captured photoelectron will generate the maximum possible voltage over the integration node. The read out noise will thus be limited.

When the dose is increased to a level where the integrated signal would be outside the range that can be handled by the read out circuit and the subsequent electronics, the signal is reduced by switching additional capacitors or a capacitor with a larger capacitance into the circuit. The amount of photon noise is consequentially also reduced since all available photons will contribute to the image.

By applying the invention a low noise contribution to low dose images is obtained, while at the same time it is guaranteed that for high dose images all available photoelectrons contribute to the image and therefore a low Poisson noise is obtained.

The invention has been developed for application to X-ray images. However, the invention can be applied to all kinds of images in which photon noise is important and should be kept as low as possible.

Specific features for preferred embodiments of the invention are disclosed in the dependent claims.

A specific embodiment of the present invention will be described with reference to the following description and drawings.

### BRIEF DESCRIPTION OF THE DRAWINGS

**Fig. 1** is a general view of a system in which the present invention can be applied,
**Fig. 2** shows the most important components of the read out apparatus,
**Fig. 3** is a detailed view of a device for reading a radiation image stored in a photostimulable phosphor screen,
**Fig. 4** shows the layer structure of the type of sensor used in the described particular embodiment,
**Fig. 5** shows further details of the sensor used in the present invention,
**Fig. 6** shows an example of a sensor element according to the present invention.

### DETAILED DESCRIPTION OF THE INVENTION

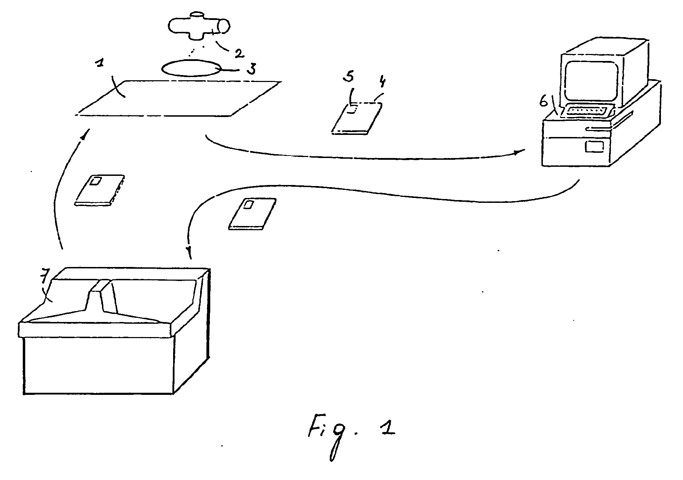

A simplified block diagram of a system in which the invention can be implemented is shown in figure 1.

A radiation image of an object (3) is recorded on a photostimulable phosphor screen (1) by exposing the screen to X-rays emitted by X-ray source (2) transmitted through the object.

The stimulable phosphor screen (1) is conveyed in a cassette (4) provided with a radiofrequency tag (RF tag) (5).

In an identification station (6) various kinds of data, for example patient identification data (name, date of birth etc.) and data relating to the exposure, more specifically an exposure class, and data relating to signal processing to be performed on the read out signal are written into the RF tag (5).

Next the cassette comprising the exposed photostimulable phosphor screen is fed into a radiation image read out apparatus (7) where the information stored in the RF tag (5) as well as the radiation image stored in the photostimulable phosphor screen is read out.

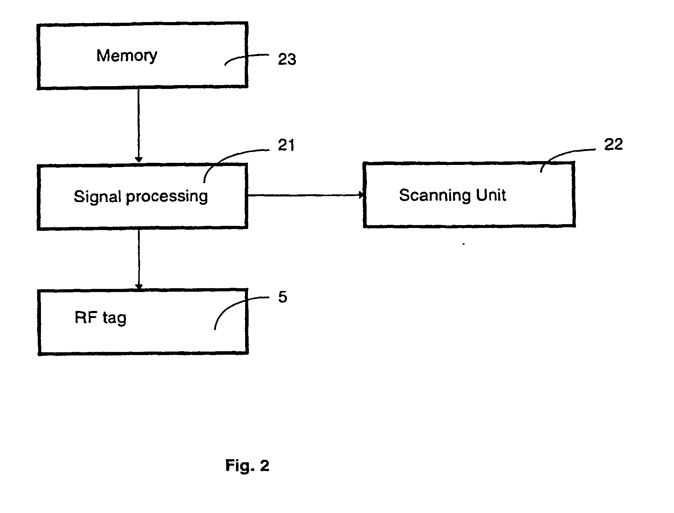

The most important components of the read out apparatus are schematically shown in figure 2.

The readout apparatus comprises an electronic signal processing unit (21), a scanning unit (22) and an electronic memory device (23).

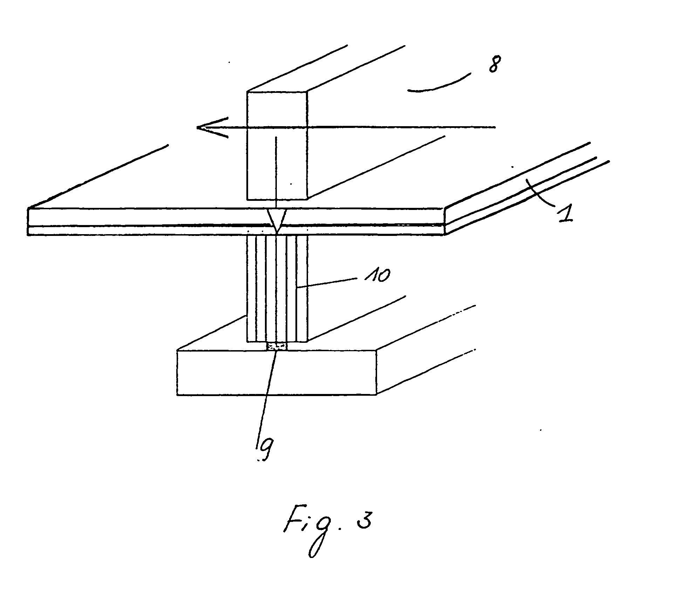

The components of scanning unit (22) are shown in figure 3.

Scanning unit (22) comprises a linear light source (8) comprising an array of laser sources, a linear array of sensor elements (9), means (not shown) for transporting photostimulable phosphor screen (1) and the array of solid state-sensor elements (9) relative to eachother and light guiding means (10) for guiding light emitted by the photostimulable phosphor screen upon stimulation towards sensor array (9).

Signal processing unit (21) is programmed for reading data, among which the exposure class, which are stored in RF tag (5) which is provided on the cassette conveying the stimulable phosphor screen.

In another embodiment the RF tag is replaced by an EEPROM that can be read out via galvanic contact.

The read out apparatus further comprises a memory device (23).
Memory device (23) stores for each specific exposure class a corresponding capacitance value which is to be switched into the solid state sensor circuit (8) of the scanning unit (22).

The electronic circuitry (21) is programmed to read from memory device (23) the capacitance value that corresponds with an exposure class that has been read out of the RF tag (5).
The electronic circuit is further programmed for controlling that the correct capacity amount is switched into the solid state sensor circuit.

The solid state sensor applied in the described embodiment is a thin film on ASIC (TFA) sensor array. TFA is a trade mark of Silicon Vision Gmbh.

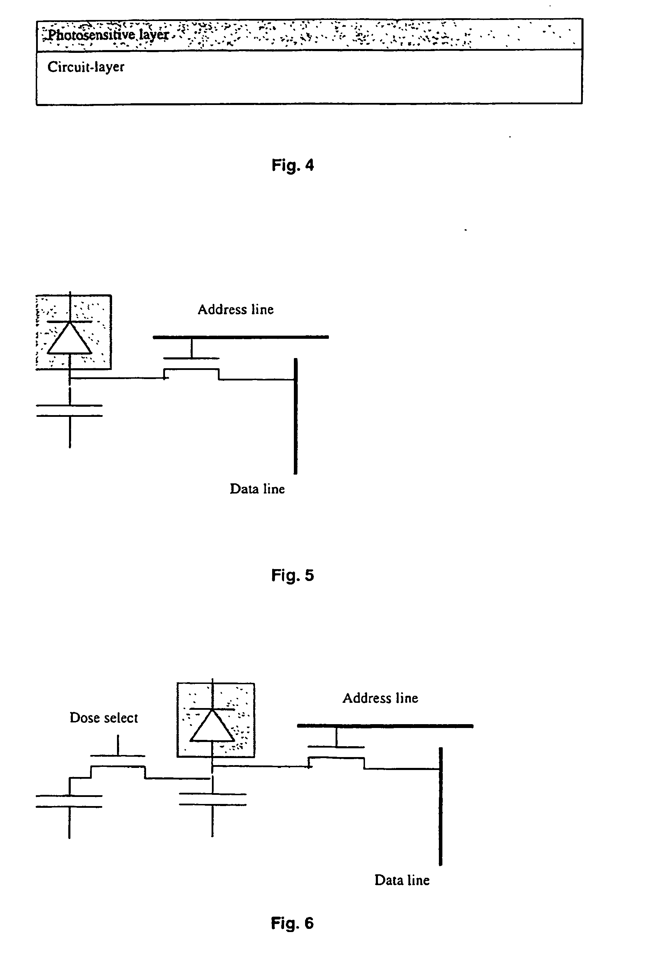

TFA technology is a combination of CMOS core, where switches and capacitors are realized and a sensor layer made of different layers of amorph silicon to form a light sensitive layer on top of the CMOS core. Such a sensor thus generally consists of two layers, one layer converting the light into photo-electrons and a second layer capturing the photo-electrons and allowing to read out the signal. Additional processing can be made available in this layer.
The layer structure of this type of solid state sensor is illustrated in figure 4.

The photosensitive layer generally consists of multiple aSi layers forming e.g. a PIN diode and a transparent conductive oxide layer on top of that. The photo current is delivered to the circuit layer at the junction of the circuit-layer and the photosensitive layer.

In the circuit layer, all electrical components known in micro electronics can be made, such as capacitors, transistors, etc. By carefully designing the layers, a pixelmatrix can be made into the circuitlayer which captures the photocurrent mainly coming from regions of the photosensitive layer corresponding to the pixels capturing the photocurrent.

The simplest circuit realising an addressable pixel is shown in figure 5.

The photo diode shown in this figure is realised in the upper layer, the capacitor and transistor are realised in the circuit layer. At each crossing of a data line and an address line, there is a transistor to couple the capacitor to the amplifiers of the data lines. For high end applications, the transistor can be replaced by a full amplifier existing of more transistors, possibly including reset circuits per pixel.

The dimension of the capacitance in this circuit determines the amount of photoelectrons that can be captured in one pixel at most. It also determines the amplitude of the signal that has to be read out.

If it is required to capture relatively high amounts of photoelectrons and still have a good signal-to-noise ratio in case images are made with very low amounts of photoelectrons, the capacitance loaded by the PIN diode is adjusted to the expected maximal amount of photoelectrons in the pixel.

In the example circuit shown in figure 6, for each pixel two capacitors are provided. When the transistor between the two capacitors is on, much more electrons can be stored on the pixel, be it that for lower amounts of electrons, the signal level will be lower than with only one capacitor. Therefore, simply by switching the dose select transistor, the circuit can be made optimal for lower dose images or for higher dose images.

The operation of an image read out device according to the present invention is as follows.

When a cassette conveying an exposed photostimulable phosphor screen is fed into the radiation image read-out apparatus (7), the information stored in the RF tag is read out by electronic circuitry (21). This information comprises an exposure class value.
Upon read out of the exposure class value, the corresponding capacitance value is retrieved from memory (23).
The transistor is set so that the total capacitance of the capacitor(s) that are connected to the solid state sensor is equal to the capacitance value retrieved from memory (23).
Next cassette (4) is opened and the photostimulable phosphor screen, carrying a radiation image, is taken out of the cassette and transported past light source (8), which is energised for illumination of the screen. The light emitted by the photostimulable phosphor screen upon stimulation is guided through light guide (10) towards solid state sensor array (9) and stored in capacitors.

Having described in detail preferred embodiments of the current invention, it will now be apparent to those skilled in the art that numerous modifications can be made therein without departing from the scope of the invention as defined in the appending claims.

## Claims

1. A system for reading a radiation image comprising
- an array of imaging elements arranged to detect said radiation image and to convert it into a charge representation of said image,
- charge integrating means coupled to said array of imaging elements for integrating an amount of charge detected by an element of said array **characterised by**
- means for determining or setting a charge amount which is expected to be detected,
- means for adjusting the charge storage capacity of said charge integrating means in accordance with the expected charge amount.

2. A system according to claim 1 wherein said radiation image has been stored in a photostimulable phosphor screen and wherein means are provided for stimulating said screen so as to cause it to emit image-wise modulated light and wherein said imaging elements are arranged for capturing said image-wise modulated light.

3. A system according to claim 1 wherein said imaging elements are solid state imaging elements.

4. A system according to claim 3 wherein said solid state imaging elements are charge coupled devices.

5. A system according to claim 3 wherein said solid state sensor elements are CMOS sensor elements.

6. A system according to claim 3 wherein said solid state sensor elements are TFA sensor elements

7. A system according to any of the preceding claims wherein said charge integrating means is at least one capacitor.

8. A system according to claim 2 wherein means are provided for deducing the charge amount that is expected to be detected from data on an exposure class set when said image was recorded on the photostimulable phosphor screen.

9. A system according to claim 2 wherein means are provided for reading said data on the exposure class from a memory device provided on a cassette conveying said photostimulable phosphor screen.

10. A method of reading a radiation image by detecting it by means of an array of imaging elements to which charge integrating means are coupled, **characterised in that** prior to detecting said radiation image a charge-amount is set or determined that is expected to be detected, and the charge storage capacity of charge integrating means is adjusted in accordance with the expected charge amount.

11. A method according to claim 10 wherein said radiation image has been stored in a photostimulable phosphor screen and wherein the method comprises the steps of
- stimulating said photostimulable phosphor screen,
- detecting image-wise modulated light emitted by said phosphor screen upon stimulation by means of said array of imaging elements to which said charge integrating means are coupled whereby prior to detecting said image-wise modulated light a charge amount is set or determined that is expected to be detected, and the charge storage capacity of charge integrating means is adjusted in accordance with the expected charge amount.

12. A method according to claims 10 or 11 wherein said imaging elements are solid state imaging elements.

13. A method according to claim 12 wherein said imaging elements are CMOS imaging elements.

14. A method according to claim 12 wherein said imaging elements are TFA imaging elements.

15. A method according to claim 12 wherein said imaging elements are charge coupled devices.

## Patentansprüche

1. Ein System zum Auslesen eines Strahlenbildes, das folgende Komponenten umfasst :
- eine Matrix von Abbildungselementen, die so angeordnet sind, dass sie das Strahlenbild nachweisen und in eine Ladungsdarstellung des Bildes umsetzen,
- ein an die Matrix von Abbildungselementen gekoppeltes Ladungsintegrierungsmittel zum Integrieren einer durch ein Element der Matrix erfassten Ladungsmenge, wobei das System ferner **gekennzeichnet ist durch** :
- ein Mittel zum Bestimmen oder Einstellen einer Ladungsmenge, die man nachzuweisen erwartet, und
- ein Mittel, mit dem die Ladungsspeicherkapazität des Ladungsintegrierungsmittels der erwarteten Ladungsmenge angepasst wird.

2. System nach Anspruch 1, **dadurch gekennzeichnet, dass** das Strahlenbild in einer ausleuchtbaren Speicherfolie gespeichert ist, ein Mittel vorgesehen ist, das diese Folie so anregt, das sie bildmäßig moduliertes Licht emittiert, und die Abbildungselemente so angeordnet sind, dass sie das bildmäßig modulierte Licht erfassen.

3. System nach Anspruch 1, **dadurch gekennzeichnet, dass** die Abbildungselemente Festkörperabbildungselemente sind.

4. System nach Anspruch 3, **dadurch gekennzeichnet, dass** die Festkörperabbildungselemente ladungsgekoppelte Elemente sind.

5. System nach Anspruch 3, **dadurch gekennzeichnet, dass** die Festkörperabbildungselemente CMOS-Sensorelemente sind.

6. System nach Anspruch 3, **dadurch gekennzeichnet, dass** die Festkörperabbildungselemente TFA-Sensorelemente sind.

7. System nach einem der vorstehenden Ansprüche, **dadurch gekennzeichnet, dass** das Ladungsintegrierungsmittel aus einem oder mehreren Kondensatoren besteht.

8. System nach Anspruch 2, **dadurch gekennzeichnet, dass** ein Mittel vorgesehen ist, das die Ladungsmenge, die man nachzuweisen erwartet, von Daten bezüglich einer Belichtungsklasse, die beim Aufzeichnen des Bildes auf der ausleuchtbaren Speicherfolie definiert ist, abzieht.

9. System nach Anspruch 2, **dadurch gekennzeichnet, dass** ein Mittel vorgesehen ist, das die Daten bezüglich einer Belichtungsklasse aus einem auf einer die ausleuchtbare Speicherfolie fördernden Kassette angeordneten Speicherelement ausliest.

10. Ein Verfahren zum Auslesen eines Strahlenbildes, wobei das Strahlenbild durch eine Matrix von Abbildungselementen, an die ein Ladungsintegrierungsmittel gekoppelt ist, nachgewiesen wird, **dadurch gekennzeichnet, dass** vor dem Nachweisen des Strahlenbildes eine Ladungsmenge, die man nachzuweisen erwartet, eingestellt oder bestimmt wird und die Ladungsspeicherkapazität des Ladungsintegrierungsmittels der erwarteten Ladungsmenge angepasst wird.

11. Verfahren nach Anspruch 10, **dadurch gekennzeichnet, dass** das Strahlenbild in einer ausleuchtbaren Speicherfolie gespeichert wird und das Verfahren folgende Schritte umfasst :
- Anregung der ausleuchtbaren Speicherfolie und
- Nachweisung des bildmäßig modulierten Lichts, das durch die Speicherfolie bei deren Anregung mittels der Matrix von Abbildungselementen, an die das Ladungsintegrierungsmittel gekoppelt ist, emittiert wird, wobei vor der Nachweisung des bildmäßig modulierten Lichts eine Ladungsmenge, die man nachzuweisen erwartet, eingestellt oder bestimmt wird, und die Ladungsspeicherkapazität des Ladungsintegrierungsmittels der erwarteten Ladungsmenge angepasst wird.

12. Verfahren nach Anspruch 11 oder 12, **dadurch gekennzeichnet, dass** die Abbildungselemente Festkörperabbildungselemente sind.

13. Verfahren nach Anspruch 12, **dadurch gekennzeichnet, dass** die Abbildungselemente CMOS-Abbildungselemente sind.

14. Verfahren nach Anspruch 12, **dadurch gekennzeichnet, dass** die Abbildungselemente TFA-Abbildungselemente sind.

15. Verfahren nach Anspruch 12, **dadurch gekennzeichnet, dass** die Abbildungselemente ladungsgekoppelte Elemente sind.

## Revendications

1. Système pour lire une image obtenue par exposition à un rayonnement, comprenant :
- une matrice d'éléments de formation d'image, arrangée pour détecter ladite image obtenue par exposition à un rayonnement et pour la transformer en une représentation de charge de ladite image ;
- des moyens d'intégration de charge couplés à ladite matrice d'éléments de formation d'image pour intégrer une valeur de charge détectée par un élément de ladite matrice, **caractérisé par**
- des moyens pour déterminer ou pour régler une valeur de charge que l'on escompte détecter ;
- des moyens pour régler la capacité de stockage de charge dudit moyen d'intégration de charge conformément à la valeur de charge escomptée.

2. Système selon la revendication 1, dans lequel ladite image obtenue par exposition à un rayonnement a été stockée dans un écran à luminophore photostimulable et dans lequel des moyens sont prévus pour stimuler ledit écran de telle sorte qu'il émette une lumière modulée en forme d'image, et dans lequel lesdits éléments de formation d'image sont arrangés pour capturer ladite lumière modulée en forme d'image.

3. Système selon la revendication 1, dans lequel lesdits éléments de formation d'image sont des éléments de formation d'image à semi-conducteurs.

4. Système selon la revendication 3, dans lequel lesdits éléments de formation d'image à semi-conducteurs sont des dispositifs à couplage de charge.

5. Système selon la revendication 3, dans lequel lesdits éléments de formation d'image à semi-conducteurs sont des éléments faisant office de capteurs CMOS.

6. Système selon la revendication 3, dans lequel lesdits éléments de formation d'image à semi-conducteurs sont des éléments faisant office de capteurs TFA.

7. Système selon l'une quelconque des revendications précédentes, dans lequel ledit moyen d'intégration de charge représente au moins un condensateur.

8. Système selon la revendication 2, dans lequel on prévoit des moyens pour déduire la valeur de charge que l'on escompte détecter à partir des données sur un jeu de classes d'exposition, lorsque ladite image a été enregistrée sur l'écran à luminophore photostimulable.

9. Système selon la revendication 2, dans lequel on prévoit des moyens pour lire lesdites données sur la classe d'exposition à partir d'un dispositif à mémoire prévu sur une cassette transportant ledit écran à luminophore photostimulable.

10. Procédé de lecture d'une image obtenue par exposition à un rayonnement, par détection de ladite image au moyen d'une matrice d'éléments de formation d'image auxquels sont couplés les moyens d'intégration de charge, **caractérisé en ce que**
avant de détecter ladite image obtenue par exposition à un rayonnement, on règle ou on détermine une valeur de charge que l'on escompte détecter et on règle la capacité de stockage de charge du moyen d'intégration de charge en fonction de la valeur de charge escomptée.

11. Procédé selon la revendication 10, dans lequel ladite image obtenue par exposition à un rayonnement a été stockée dans un écran à luminophore photostimulable, et dans lequel le procédé comprend les étapes consistant à :
- stimuler ledit écran à luminophore photostimulable ;
- détecter la lumière modulée en forme d'image, émise par ledit écran à luminophore, lors de la stimulation dudit écran, au moyen de ladite matrice d'éléments de formation d'image auxquels sont couplés des moyens d'intégration de charge, procédé dans lequel avant de détecter ladite lumière modulée en forme d'image, on règle ou on détermine une valeur de charge que l'on escompte détecter et on règle la capacité de stockage de charge du moyen d'intégration de charge en fonction de la valeur de charge escomptée.

12. Procédé selon la revendication 10 ou 11, dans lequel lesdits éléments de formation d'image sont des éléments de formation d'image à semi-conducteurs.

13. Procédé selon la revendication 12, dans lequel lesdits éléments de formation d'image à semi-conducteurs sont des éléments faisant office de capteurs CMOS.

14. Procédé selon la revendication 12, dans lequel lesdits éléments de formation d'image à semi-conducteurs sont des éléments faisant office de capteurs TFA.

15. Procédé selon la revendication 12, dans lequel lesdits éléments de formation d'image à semi-conducteurs sont des dispositifs à couplage de charge.
